# EUROPÄISCHE PATENTSCHRIFT

(11) **EP 1 709 928 B1**
(45) Veröffentlichungstag und Bekanntmachung des Hinweises auf die Patenterteilung: **14.03.2012**
(21) Anmeldenummer: 06006736.0
(22) Anmeldetag: 30.03.2006
(51) Int. Cl.: A61C 1/05, F01D 15/06

(54) **Turbinenrad für ein gasbetriebenes medizinisches Handstück**
Turbine wheel for a gas powered medical handpiece
Roue de turbine pour pièce à main médicale pneumatique

(30) Priorität: 07.04.2005 DE 102005016035
(43) Veröffentlichungstag der Anmeldung: 11.10.2006
(60) Teilanmeldung: 10182486.0
(73) Patentinhaber: Kaltenbach & Voigt GmbH, 88400 Biberach (DE)
(72) Erfinder: Flock, Alexander, 88400 Biberach (DE); Rösch, Thomas, 88447 Warthausen (DE); Gruber, Helmut, 87740 Buxheim (DE)
(74) Vertreter: Schmidt-Evers, Jürgen

(56) Entgegenhaltungen:
- CS-B- 199 177
- DE-A1- 3 322 146
- DE-A1- 19 807 566
- DE-A1- 19 833 249
- FR-A- 2 692 621
- US-A- 5 797 743

## Beschreibung

Die Erfindung betrifft ein Turbinenrad für ein gasbetriebenes medizinisches, insbesondere dentalmedizinisches, Handstück und ein solches Handstück mit einem Turbinenrad.

Ein Turbinenrad und ein Handstück dieser Arten sind in der DE 198 33 249 A1 beschrieben. Bei diesem vorbekannten Turbinenrad bzw. Handstück weisen die Schaufeln des Turbinenrads an ihrer mit Druckluft beaufschlagbaren Frontseite jeweils eine konkave kreisbogenabschnittförmige Krümmungsfläche auf, deren Krümmungsachse etwa radial verläuft, wobei das Handstück eine Zuführungsleitung für Druckluft aufweist, deren Mündung sekantial auf einen seitlichen Randbereich der Schaufeln gerichtet ist. Infolgedessen wird im Betrieb des Turbinenrads bzw. Handstücks der Druckluftstrom jeweils an der gekrümmten Frontseite umgelenkt, wobei er die Frontseite im axial gegenüberliegenden Randbereich verlässt. Hierbei gibt der Luftstrom nicht nur seine Aufprallenergie an die jeweilige Schaufel ab, sondern auch eine zusätzliche, durch die Umlenkung hervorgerufene Energie, die die Leistung des Turbinenantriebs vergrößert.

Bei einem Turbinenrad oder Handstück der vorliegenden Arten ist eine hohe Leistungsausnutzung und insbesondere Leistungsvergrößerung grundsätzlich gefordert. Dies deshalb, weil das Turbinenrad bzw. das Handstück insbesondere in seinem vorderen Bereich eine möglichst kleine Konstruktionsgröße haben soll, damit bei der Behandlung bzw. Bearbeitung des menschlichen oder tierischen Körpers oder eines künstlichen Teils derselben der Blick auf die Behandlungsstelle möglichst wenig beeinträchtigt wird. Dies gilt insbesondere für Behandlungsstellen in Körperhöhlen, in denen der vorhandene Raum beengt ist, wie es im Mundraum eines Patienten oder Kopfmodells bezüglich eines dentalmedizinischen Handstücks der Fall ist. Je größer die abgegebene Leistung des Turbinenantriebs ist, desto kleiner kann dieser bzw. das Turbinenrad oder der betreffende Bereich des Handstücks ausgebildet werden, und ein desto größeres Blickfeld auf die Operationsstelle steht dem Operateur zur Verfügung.

Der Erfindung liegt deshalb die Aufgabe zugrunde, bei einem Turbinenrad oder einem Handstück der eingangs angegebenen Arten die Antriebsleistung zu vergrößern bzw. besser auszunutzen.

Diese Aufgabe wird durch die Merkmale von Anspruch 1 gelöst. Vorteilhafte Weiterbildungen der Erfindung sind in den Unteransprüchen beschrieben.

Erfindungsgemäß ist ein Turbinenrad für ein gasbetriebenes, medizinisches, insbesondere dentalmedizinisches Handstück vorgesehen, das eine Mehrzahl Schaufeln aufweist, die sich in radialer Richtung von einer Nabe erstrecken, und die sich in axialer Richtung von einem radialen Ringsteg, der sich in dem einen axialen Endbereich des Turbinenrads befindet, zu einer im anderen axialen Endbereich des Turbinenrads angeordneten Ringausnehmung erstrecken, wobei jeweils eine den First der zugehörigen Schaufel im mittleren axialen Bereich des Firstes schneidende Längsmittelebene und die Rückseite einen spitzen Winkel einschließen, der kleiner ist als 38°, insbesondere etwa 26° bis 36°, wobei jeweils die Frontseite der Schaufeln in einer sekantialen Längsebene im Wesentlichen konkav geformt ist. Die Frontseite der Schaufeln ist hierbei auch in radialer Richtung hohl ausgebildet und die Rückseite der Schaufeln weißt zumindest in dem dem Ringsteg abgewandten axialen Endbereich eine Neigungsfläche auf, die in der dem Ringsteg axial abgewandten Richtung zur Frontseite hin geneigt ist.

Des Weiteren ist ein medizinisches, insbesondere dentalmedizinisches Handstück vorgesehen, das ein längliches Griffteil aufweist, in dessen vorderen Endbereich eine Haltevorrichtung für ein Werkzeug drehbar gelagert ist, die mit einem im Handstück drehbar gelagerten erfindungsgemäßen Turbinenrad in Antriebsverbindung steht, wobei eine Zurührleitung für ein Gas vor dem Turbinenrad so endet, dass der austretende Gasstrom gegen die Frontseite der jeweiligen Schaufel gerichtet ist.

Durch die Neigung der Neigungsfläche der Rückseite der Schaufeln zur Frontseite hin, erhalten die Schaufeln jeweils eine strömungsgünstige Form, so dass sie während der Rotation des Turbinenrads dem Antriebsluftstrom weniger Widerstand entgegensetzen mit der Folge, dass die Antriebsleistung besser ausgenutzt und eine größere abgegebene Leistung erzielt wird. Dabei ist zu berücksichtigen, dass die vom Druckfluid beaufschlagte Frontseite der Schaufel in ihrer Flächengröße erhalten bleibt und deshalb von daher keine Beeinträchtigung vorhanden ist.

Die Neigungsfläche kann vorteilhafterweise bei ihrer Erstreckung zum Ende der Schaufel hin zur Frontseite hin gekrümmt sein. Diese Ausgestaltung ist besonders strömungsgünstig. Außerdem kann die Neigungsfläche in die der Drehrichtung des Turbinenrads entgegengesetzte Umfangsrichtung und somit ebenfalls zur Frontseite hin geneigt sein. Diese zusätzliche Neigung lässt sich z.B. dadurch erreichen, dass die Krümmungsachse bezüglich der Rückseite der Schaufel in die der Drehrichtung entgegengesetzte Umfangsrichtung um einen spitzen Winkel winkelversetzt ist.

Durch die hohle Ausbildung der Frontseite der Schaufeln auch in radialer Richtung wird die Leistung ebenfalls besser ausgenutzt bzw. es wird die abgegebene Leistung vergrößert, weil der Druckfluidstrom an der hohlen Frontseite einen größeren Widerstand findet und deshalb die Energie des Druckfluidstroms besser ausgenutzt werden kann. Außerdem ist der Winkel der Frontseite bzw. Frontfläche, insbesondere im radial äußeren Bereich der Schaufel, bezüglich dem auftreffenden Druckfluid auch dann günstig, wenn die jeweilige Schaufel sich im Rotationsbetrieb vom Zuführungsrohr des Druckfluids entfernt. Es wird somit aufgrund dieser erfindungsgemäßen Krümmung die Leistung dadurch besser ausgenutzt bzw. vergrößert, weil die hohle Fläche den auftreffenden Luftstrom vermehrt umlenkt und die dabei entstehende Aufprall- und Umlenkenergie an die Schaufel abgegeben wird.

Durch den spitzen Winkel, der kleiner ist als 38° und durch die den Frist der Schaufel im mittleren axialen Bereich des Firstes schneidende Längsmittelebene und die Rückseite der Schaufel eingeschlossen wird, ist die Rückenfläche der Schaufeln so geformt, dass sie zum einen einen steileren Einfallswinkel des Druckfluidstroms und zum anderen eine größere Frontseite der Schaufeln ermöglicht, wodurch die Antriebsenergie ebenfalls besser ausgenutzt und die Leistung verbessert wird. Außerdem erfüllt diese Ausgestaltung den Zweck, auf der Saugseite keine Fläche für ein Gegendrehmoment zu erzeugen.

In den Unteransprüchen sind Merkmale enthalten, die weitere Leistungssteigerungen ermöglichen und außerdem zu einfachen und kleinen Konstruktionen führen, die sich auch für ein dentalmedizinisches Handstück eignen.

Nachfolgend werden die Erfindung und weitere durch sie erzielbare Vorteile anhand von vorteilhaften Ausgestaltungen eines bevorzugten Beispiels näher erläutert. Es zeigt:
- Fig. 1: ein erfindungsgemäßes dentalmedizinisches Behandlungsinstrument mit einem Handstück in der Seitenansicht;
- Fig. 2: ein Turbinenrad des Behandlungsinstruments in perspektivischer Darstellung;
- Fig. 3: das Turbinenrad im radialen mittigen Querschnitt;
- Fig. 4: die in Fig. 3 mit X bezeichnete Einzelheit in einer anderen Bearbeitungsstellung eines Fräsers,
- Fig. 5: die in Fig. 3 mit X bezeichnete Einzelheit in einer weiteren Bearbeitungsstellung des Fräsers,
- Fig. 6: das Turbinenrad in der radialen Ansicht;
- Fig. 7: den Teilschnitt VII-VII in Fig. 6;
- Fig. 8: den Teilschnitt VIII-VIII in Fig. 6;
- Fig. 9: den Teilschnitt IX-IX in Fig. 3.

Die Hauptteile des allgemein mit 1 bezeichneten Behandlungsinstruments sind ein das hintere Ende des Behandlungsinstruments 1 bildendes Anschlussteil 2, das Handstück 3, das durch eine Schnellkupplung 4 in Form einer Steckkupplung, insbesondere einer Steck/Drehkupplung, mit dem Anschlussteil 2 lösbar verbunden ist und im gekuppelten Zustand sich in Form eines länglichen oder stabförmigen Griffteils 3a vom Anschlussteil 2 nach vorne erstreckt, eine im vorderen Endbereich des Handstücks 3 angeordnete Haltevorrichtung 5 für ein Behandlungs- oder BearbeitungsWerkzeug 6, und eine Turbine 8, die in den vorderen Endbereich des Griffteils 3a integriert ist.

Es erstreckt sich längs durch das Behandlungsinstrument 1 eine Druckluftleitung 9 zur Turbine 8 und gegebenenfalls auch eine Zuführleitung für verbrauchte Druckluft.

Die Haltevorrichtung 5 ist durch eine sich vorzugsweise quer zum Griffteil 3a erstreckende und drehbar im Griffteil 3a gelagerte Aufnahmehülse 11 gebildet, auf der ein Turbinenrad 7 der Turbine 8 sitzt und die drehbar im vorzugsweise verdickten Handstückkopf 12 des Handstücks 2 gelagert ist. Die Aufnahmehülse 11 ist an ihrem einen Ende offen, wodurch eine Einstecköffnung 13 für einen Schaft 6a des Werkzeugs 6 gebildet ist, dessen abrasiver oder mit Schneidkanten versehener Bearbeitungsabschnitt mit 6b bezeichnet ist. Der den Handstückkopf 12 aufweisende vordere Griffteilabschnitt 3b kann bezüglich dem hinteren Griffteilabschnitt 3a gerade oder zu der Einstecköffnung 13 abgewandten Seite 14 des Handstücks 3 hin gebogen oder eckig abgewinkelt angeordnet sein, wobei der spitze Winkel W 1 im Winkelbereich zwischen 10 ° und 28 °, vorzugsweise etwa 19 °, betragen kann.

Der zwischen der Längsmittelachse 3c und der Mittelachse 5a der Haltevorrichtung 5 für das Werkzeug 6 eingeschlossene Winkel W2 kann ein rechter oder stumpfer Winkel sein, der z. B. etwa 95° bis 110°, insbesondere etwa 100° bis 105°, beträgt.

Durch die Schnellkupplung 4 wird die Handhabbarkeit des Handstücks 3 wesentlich verbessert, weil das Anschlussteil 2 an Drehbewegungen des Handstücks 3 während der Behandlung bzw. Bearbeitung nicht teilzunehmen braucht und deshalb ein Drehausgleich stattfinden kann. Die Steck/Drehkupplung weist einen hohlzylindrischen Kupplungszapfen 4a am einen Kupplungsteil und eine den Kupplungszapfen 4a mit geringem Bewegungsspiel aufnehmende Kupplungsausnehmung 4b auf. Bei der vorliegenden Ausgestaltung erstreckt sich der Kupplungszapfen 4a vom Anschlussteil 2 nach vorne und die Kupplungsausnehmung 4b ist im hinteren Endbereich des Handstücks 3 angeordnet. Zur lösbaren Positionierung der Steckkupplung in der Kupplungsstellung dient eine manuell überdrückbare Verrastungsvorrichtung 15 mit einem quer bewegbar gelagerten Verrastungselement 15a, das in einer Ausnehmung in der Außenmantelfläche des Steckzapfens 4a oder in der Innenmantelfläche der Steckausnehmung 4b angeordnet ist und durch eine elastische Federkraft in eine im jeweils gegenüberliegend anderen Teil angeordnete Verrastungsausnehmung so hineingedrückt wird, dass das Verrastungselement 15a ausfedern kann und die Verrastungsvorrichtung 15 durch eine axial gerichtete und manuell leicht aufbringbare Zugkraft überdrückbar ist.

Das Anschlussteil 2 ist durch eine mit ihm verbundene, andeutungsweise dargestellte flexible Versorgungsleitung 16, insbesondere durch einen flexiblen Versorgungsschlauch, mit einem nicht dargestellten Steuergerät verbunden, wie es bei einem medizinischen oder dentalmedizinischen Behandlungsplatz an sich bekannt ist. Durch die Versorgungsleitung 16 und durch das Behandlungsinstrument 1 erstreckt sich die Zuführleitung 9 und kann sich wenigstens eine weitere Mediumleitung, z. B. für Licht, Luft, Wasser und/oder Spray, erstrecken, die sich so durch die Schnellkupplung 4 erstrecken, dass der Durchgang in der oder den Mediumleitungen in jeder Drehstellung gewährleistet ist. Die wenigstens eine Zuführleitung 9, kann die Teilungsfuge 17 zwischen dem Steckzapfen 4a und der Steckausnehmung 4b Z-förmig in einer Ringnut 18 durchsetzen, wobei der die Teilungsfuge 17 radial durchsetzende Abschnitt der Zuführleitung 9, durch zu beiden Seiten der Ringnut 18 angeordnete Dichtringe 19 abgedichtet ist, die in einer Außenringnut des Steckzapfens 4a oder in einer Innenringnut der Steckausnehmung 4b angeordnet sind.

Die Turbine 8 weist ein Turbinenrad 7 auf, das in einer z.B. hohlzylindrischen Turbinenkammer 21 drehbar gelagert ist und an seinem Umfang eine Mehrzahl, z.B. sieben oder acht Stück, Schaufeln 22 aufweist, die in der jeweiligen gleichen Drehstellung einander gleich ausgebildet sind, so dass im folgenden nur eine Schaufel 22 beschrieben zu werden braucht.

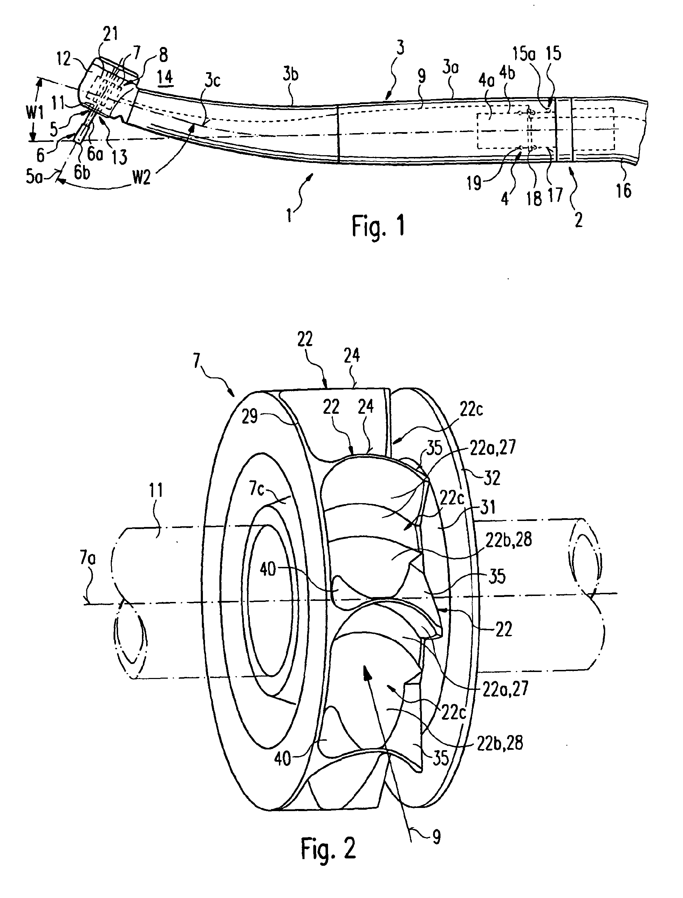

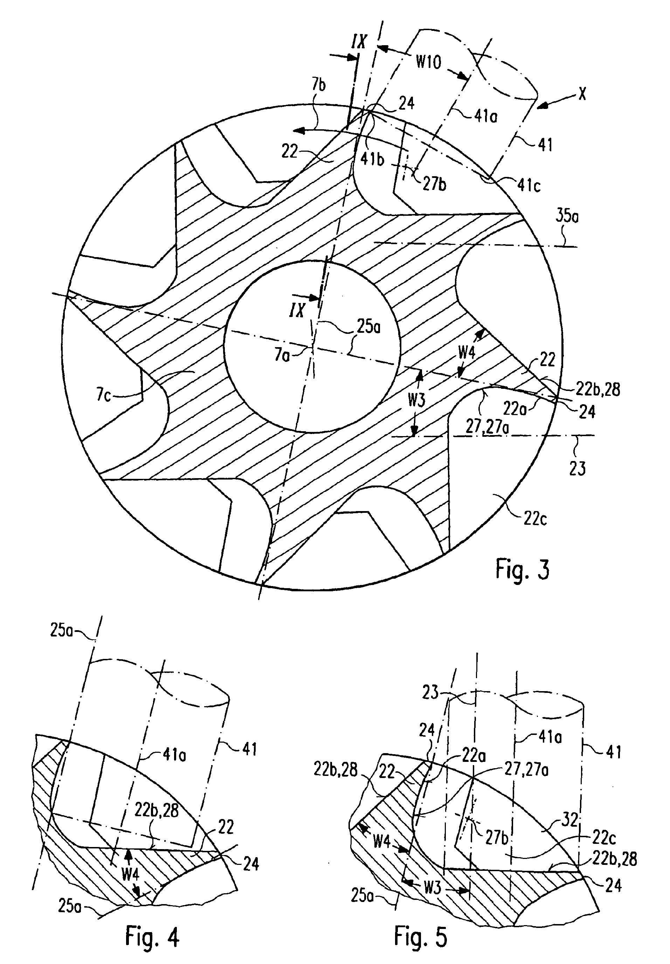

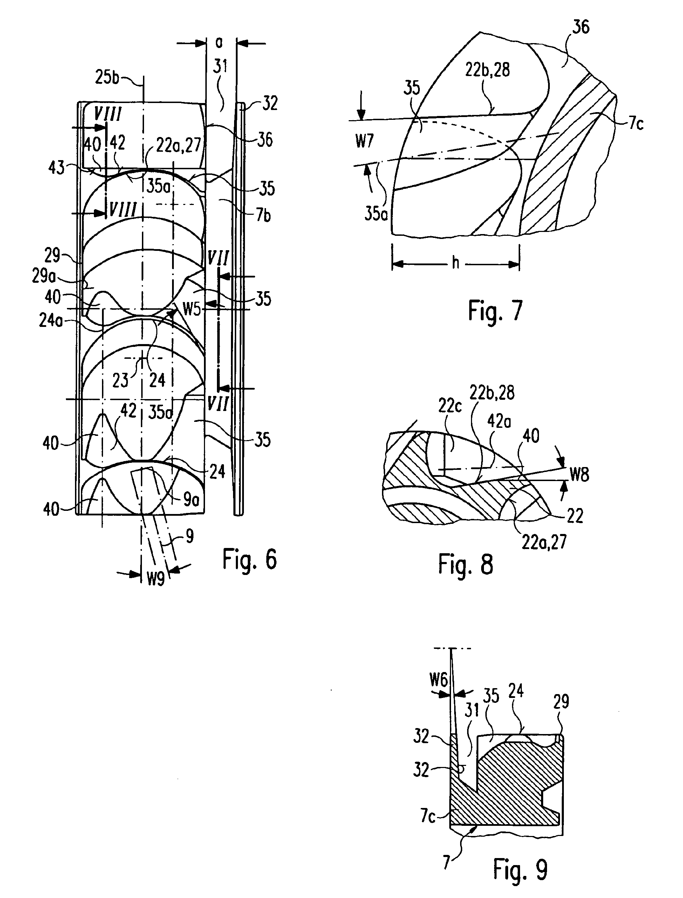

Wie am besten aus Fig. 2 und 6 zu entnehmen ist, mündet die Zuführleitung 9 - längs der Drehachse 7a gesehen - sekantial in die Turbinenkammer 21, wobei die der Einlassöffnung 9a zugewandte Seite der sich axial erstreckenden Schaufel 22 mit Frontseite 22a und die der Einlassöffnung 9a abgewandte, vorzugsweise ebene, Seite der Schaufel 22 mit Rückseite 22b bezeichnet ist. Die Frontseite 22a ist in einer sekantialen Ebene und in einer radialen Ebene konkav und somit sphärisch geformt. Die Frontseite 22a ist bezüglich einer in Fig. 3 und 6 dargestellten ersten Krümmungsachse 23 vorzugsweise gleichmäßig und somit kreisbogenabschnittförmig gekrümmt, wobei die Krümmungsachse 23 sich rechtwinklig zur Rückseite 22b der benachbarten Schaufel 22 erstreckt und einen spitzen Winkel W3 mit einer den First 24 der anderen benachbarten Schaufel 22 und die Drehachse 7a schneidenden Längsmittelebene 25a einschließt. Dieser Winkel W3 der etwa 9° bis 19°, insbesondere etwa 13° beträgt, ist zur Drehachse 7a hin offen.

Außerdem ist die Frontseite 22a bzw. die Schaufelfläche 27 in der radialen Querschnittsebene konkav gekrümmt, wobei diese Krümmungslinie 27a vorzugsweise radial einwärts progressiv, d.h. mit zunehmendem Abstand vom Umfang stärker, gekrümmt ist. Beide Krümmungen ergeben eine sphärisch gekrümmte Schaufelfläche 27, die sich über die gesamte Frontseite 22a erstreckt. Eine im wesentlichen einen Krümmungsmittelpunkt verdeutlichende Krümmungsachse der im mittleren Radialabschnitt verlaufenden Krümmungslinie 27a ist zur besseren Orientierung angedeutet, s. Fig. 3, und mit 27b bezeichnet.

Die Rückseite 22b der Schaufel 22 weist eine ebene Ausgangsfläche 28 auf, die mit der Längsmittelebene 25a einen spitzen Winkel W4 von etwa 26° bis 36°, insbesondere etwa 32°, einschließt, der zum Umfang hin offen ist.

Die Schaufel 22 erstreckt sich auf einer Seite des Turbinenrades 7, beim Ausführungsbeispiel auf der der Einstecköffnung 13 zugewandten Seite, von einem dünnen radialen Ringsteg 29, der die ihm zugewandten axialen Enden der Schaufeln 22 verbindet und stabilisiert und zugleich den zwischen der Frontseite 22a der einen Schaufel 22 und der Rückseite 22b der in Umfangsrichtung benachbarten Schaufel 22 vorhandenen Schaufelraum 22c mit einer im wesentlichen radialen Innenseitenfläche 29a begrenzt.

Auf der axial gegenüberliegenden Seite ist ein solcher Ringsteg 29 nicht vorhanden, und deshalb ist der Schaufelraum 22c zu dieser Seite hin offen, und er mündet in eine Ringkammer 31, die somit bezüglich allen Schaufelräumen 22c offen ist und in einem axialen Abstand a von den Schaufeln 22 durch einen zweiten Ringsteg 32 begrenzt ist, der sich von einer auch die Schaufeln 22 tragenden Turbinenradnabe 7c im wesentlichen radial nach außen erstreckt und in der Radialhöhe der Firste 24 der Schaufeln 22 endet.

Am dem Ringsteg 29 axial gegenüberliegenden Ende der Schaufeln 22 bzw. am Auslauf in die Ringkammer 31 schneiden jeweils die um die etwa radiale Krümmungsachse 23 gekrümmten Schaufelflächen 27 die am Auslauf vorhandenen Seitenflächen 36 der Schaufeln 22. Dabei schließen die Frontseiten 22a bzw. sich daran erstreckende Tangenten mit den Seitenflächen 36 einen spitzen Winkel W5 ein, der kleiner ist also etwa 35°, insbesondere etwa 10° bis 30° beträgt.

Die Innenseitenfläche 32a des zweiten Ringstegs 32 kann nach außen divergent ausgebildet sein und mit der außenseitigen Radialebene des Ringstegs 32 bzw. des Turbinenrads 7 einen spitzen Winkel W6 von etwa 3° (Fig. 9) einschließen kann. Die Grundfläche der Ringkammer 31 ist zum Ringsteg 32 hin divergent geformt. Eine Konusfläche kann mit der Drehachse 7a einen spitzen Winkel einschließen.

Die Rückseite 22b der Schaufeln 22 ist jeweils in einem oder in beiden axialen Endbereichen mit einer Neigungsfläche 35 zur Frontseite 22a hin axial geneigt, vorzugsweise gekrümmt, ausgebildet. Beim Ausführungsbeispiel ist die Krümmung im der Ringkammer 31 zugewandten Endbereich durch eine konvexe Krümmungsfläche gebildet, die sich vorzugsweise über die im wesentlichen gesamte radiale Höhe h des Eckenbereichs zwischen der Rückseite 22b und der zugehörigen, hier der Ringkammer 31 zugewandten, Seitenfläche 36 der Schaufeln 22 erstreckt, zur Frontseite 22a der Schaufel 22 geneigt ist und dadurch die bei der bekannten Ausgestaltung vorhandene Ecke gerundet bricht. Im Rahmen der Erfindung kann der dadurch gebildete axial geneigte Verlauf der Rückseite 22b auch durch eine die Neigung bildende Schrägfläche gebildet sein, was aus Vereinfachungsgründen nicht dargestellt ist.

Die axial geneigte und dabei ebene oder gekrümmte Fläche 35 ist vorzugsweise auch in radialer Richtung bzw. in Umfangsrichtung geneigt und mit zunehmendem Abstand von der Drehachse 7a im Sinne einer radialen Neigung progressiv. Hierdurch wird der durch die axiale Neigung geschaffene Freiraum auch radial nach außen vergrößert, und es kann der im Drehbetrieb des Turbinenrades 7 durch den Schaufelraum 22c strömende Luftstrom im vorbeschriebenen Eckenbereich auch durch diese radiale Neigung besser abgleiten, wodurch der Eckenbereich dem Luftstrom weniger Widerstand entgegensetzt, was zu einer besseren Leistungsausnutzung und zu einer Vergrößerung der abgegebenen Leistung führt.

Die radial nach außen gerichtete Neigung kann dadurch erreicht werden, dass die vorzugsweise parallel zur Quermittelebene 25b verlaufende Krümmungsachse 35a der Krümmungsfläche 35 bezüglich der Rückseite 22b entgegen der Drehrichtung 7b geneigt ist. In Fig. 7 ist dieser Neigungswinkel, der Krümmungsachse 35a der etwa 5° bis 15°, insbesondere etwa 10° beträgt, mit W7 bezeichnet.

Im anderen axialen Endbereich der Rückseite 22b ist beim Ausführungsbeispiel die zur Frontseite 22a hin gerichtete axiale Neigung durch eine Rinne 40 gebildet, die mit ihrer der Rückseitenmitte zugewandten Flanke die geneigte Fläche bildet. Beim Ausführungsbeispiel ist diese Flanke ebenfalls durch eine Krümmungsfläche 42 gebildet, s. Fig. 6.

Im übrigen ist der Grund der Rinne 40 konkav gerundet, und die der Krümmungsfläche 42 gegenüberliegende Flanke 43 der Rinne 40 kann an der Innenseitenfläche 29a auslaufen oder in einem geringen Abstand davon an der Rückseite 22b auslaufen, wie es beim Ausführungsbeispiel realisiert ist.

Die Breite der Krümmungsfläche 42 ist vorzugsweise mit zunehmendem Abstand von der Drehachse 7a progressiv. Beim Ausführungsbeispiel wird dies dadurch erreicht, dass die Krümmungsachse 42a der Krümmungsfläche 42 und/oder Rinne 40 oder die Grundfläche der Rinne 40 bezüglich der Rückseite 22b entgegen der Drehrichtung 7b des Turbinenrades 7a um den Winkel W8, der etwa 5° bis 15°, insbesondere etwa 10° beträgt, geneigt ist, was am besten aus Fig. 8 zu entnehmen ist.

Die zur Frontseite 22a hin gerichtete radiale Neigung der Rückseite 22b im linken axialen Endbereich hat besondere Vorteile, weil beim Ausführungsbeispiel im linken axialen Endbereich der Luftstrom nicht seitlich ausmündet. In diesem axialen Endbereich wird durch diese radiale Neigung der Vorteil erreicht, dass der Schaufelraum 22a in der Umfangsrichtung einen größeren Freiraum bekommt, der am First 24 dazu führt, dass die in diesem axialen Endbereich zwischen den einander benachbarten Schaufelräumen 22c vorhandene und durch einen zwickelförmigen Mantelflächenabschnitt 24a gebildete Firstverbreiterung verringert wird. Dies ist deshalb vorteilhaft, weil der Mantelflächenabschnitt 24a die Wirksamkeit des aus der Einlassöffnung 9a austretenden Luftstroms beeinträchtigt. Durch die Verringerung der Größe des Mantelflächenabschnitts 24a wird diese Beeinträchtigung verringert.

Außerdem führt diese radiale Neigung dazu, dass der jeweils mit Druckluft beaufschlagte Schaufelraum 22c bei der fortwährenden Drehung zeitlich länger und somit vermehrt mit dem Druckmedium beaufschlagt werden kann. Beide vorbeschriebenen Besonderheiten führen somit zu einer weiteren Verbesserung der Leistungsausnutzung.

Darüber hinaus ist durch beide vorbeschriebenen Neigungsflächen 35, 42 in den axialen Endbereichen weniger Material vorhanden und deshalb wird das Gewicht des Turbinenrads 7 verringert was ebenfalls zu dessen Leistungsvergrößerung beiträgt und den Anlauf des Turbinenrads 7 beschleunigt und dessen Nachlauf verringert.

Wie insbesondere aus Fig. 2 und 6 zu entnehmen ist, ist die Zuführleitung 9 bezüglich einer Quermittelebene 25b zur der Ringkammer 31 abgewandten Axialrichtung hin geneigt, wobei dieser Neigungswinkel W9 etwa 5° bis 15°, insbesondere etwa 10°, betragen kann. Dabei kann die Einlassöffnung 9a im mittleren Bereich der Schaufeln 22 angeordnet sein oder in der Hälfte der Schaufeln, die der Ringkammer 31 benachbart ist.

Nachfolgend wird noch ein besonderer Sachverhalt beschrieben, der die sphärische Form der Frontseite 22a bzw. Schaufelfläche 27 der Schaufeln 22 betrifft. Diese besondere Form besteht darin, dass die Frontseite 22a bzw. Schaufelfläche 27 so gekrümmt in die Innenseitenfläche 29a ausläuft, dass diese eine Tangente bezüglich der Krümmung der Schaufelfläche 27 bildet. Hierdurch wird eine gleichmäßige und störungsfreie Luftströmungslenkung erreicht, was ebenfalls zur besseren Leistungsausnutzung beiträgt.

Nachfolgend werden Verfahrensmerkmale eines vorteilhaften Verfahrens zum Herstellen der um zwei quer zueinander verlaufenden Krümmungsachsen 23, 27b gekrümmte Krümmungsfläche der Frontseite 22a bzw. Schaufelfläche 27 beschrieben.

Es ist bekannt, die Rückseite 22b und eine nur um die erste Krümmungsachse 23 gekrümmte Frontseite 22a gleichzeitig durch einen zylindrischen Fingerfräser zu fräsen, dessen Stirnseite eben ist. Ein solcher Fingerfräser wird in einer Winkelstellung, in der seine Mittelachse rechtwinklig zur Rückseite 22b verläuft, so sekantial in die Mantelfläche des Turbinenrads 7 hineinbewegt, dass der Fingerfräser zunächst die Rückseite 22b fräst und am Ende seiner Vorschubbewegung die Frontseite 22a fräst, wobei deren Krümmung durch die Umfangskrümmung des Fingerfräsers bestimmt ist.

Beim hier erläuterten Verfahren werden dagegen beide Krümmungen bzw. die sphärische Krümmung der Schaufelfläche 27 gleichzeitig gefräst, wobei, z.B. ebenfalls ein zylindrischer, Fingerfräser 41 verwendet werden kann. Bei diesem Verfahren wird der Fingerfräser 41 aus einer in Fig. 3 oben dargestellten, bezüglich der Quermittelebene 25b mittig angeordneten Ausgangsstellung, in der seine Längsmittelachse 41 a einen radial nach außen offenen spitzen Winkel W10 mit einer die Drehachse 7a und den zugehörigen Schaufelfirst 24 schneidenden Längsmittelebene 25a einschließt, und sein vorderer Rand 41b den First der Schaufel 22 berührt, bezüglich dem Turbinenrad 7 radial einwärts eingesenkt und gleichzeitig mit einer den spitzen Winkel W10 verkleinernden Schwenkbewegung geschwenkt. Diese aus der Einsenkbewegung und der Schwenkbewegung kombinierte Fräsbewegung wird fortgesetzt, bis die vorzugsweise ebene Stirnfläche 41 c des Fräsers 41 der gewünschten Position der Rückseite 22b bzw. Rückenfläche 28 der Schaufel 22 entspricht, was es die zeichnerische Darstellung in Fig. 5 zeigt. Bei dieser Fräsbewegung fräst der Fräser 41 die Schaufelfläche 27 mit der gerundeten Krümmungslinie 27a, die gleichmäßig gekrümmt oder radial einwärts progressiv gekrümmt sein kann und mit tangentialer Anordnung der Ausgangsfläche 28 in diese auslaufen kann oder in diese stumpfwinklig auslaufen kann. Hierdurch wird eine konkave Schaufelfläche 27 geschaffen, die stufenlos in die Innenfläche 29a des Ringstegs 29 übergeht, die vorzugsweise in einer radialen Querebene verläuft. Die in Fig. 4 dargestellte Schwenkstellung des Fräsers 41 zeigt eine Mittelstellung bei der vorbeschriebenen Fräsbewegung.

Als nächster Verfahrensschritt, der sich ohne Stillstand an die vorbeschriebene Fräsbewegung anschließen kann, wird der Fräser 41 in der Stellung gemäß Fig. 5 längs der Ausgangsfläche 27 und in der radialen Querebene 25b nach außen bewegt, wobei er die äußeren Bereiche der Rückenfläche 28 und der Innenfläche 29a fertig stellt.

## Patentansprüche

1. Turbinenrad (7) für ein gasbetriebenes, medizinisches, insbesondere dentalmedizinisches Handstück (3), mit einer Mehrzahl Schaufeln (22), die sich in radialer Richtung von einer Nabe (7c) erstrecken, und die sich in axialer Richtung von einem radialen Ringsteg (29), der sich in dem einen axialen Endbereich des Turbinenrads (7) befindet, zu einer im anderen axialen Endbereich des Turbinenrads (7) angeordneten Ringausnehmung (31) erstrecken, wobei jeweils eine den First (24) der zugehörigen Schaufel (22) im mittleren axialen Bereich des Firstes (24) schneidende Längsmittelebene (25a) und die Rückseite (22b) einen spitzen Winkel (W4) einschließen, der kleiner ist als 38°, insbesondere etwa 26° bis 36°, wobei jeweils die Frontseite (22a) der Schaufeln (22) in einer sekantialen Längsebene im Wesentlichen konkav geformt ist,
**dadurch gekennzeichnet,**
**dass** die Frontseite (22a) der Schaufeln (22) auch in radialer Richtung hohl ausgebildet ist und die Rückseite (22b) der Schaufeln (22) zumindest in dem dem Ringsteg (29) abgewandten axialen Endbereich eine Neigungsfläche (35) aufweist, die in der dem Ringsteg (29) axial abgewandten Richtung zur Frontseite (22a) hin geneigt ist.

2. Medizinisches, insbesondere dentalmedizinisches Handstück (3), mit einem länglichen Griffteil (3a), in dessen vorderen Endbereich eine Haltevorrichtung (5) für ein Werkzeug (6) drehbar gelagert ist, die mit einem im Handstück (3) drehbar gelagerten Turbinenrad (7) gemäß Anspruch 1 in Antriebsverbindung steht, wobei eine Zurührleitung (9) für ein Gas vor dem Turbinenrad (7) so endet, dass der austretende Gasstrom gegen die Frontseite (22a) der jeweiligen Schaufel (22) gerichtet ist.

3. Turbinenrad nach Anspruch 1 oder Handstück nach Anspruch 2,
**dadurch gekennzeichnet,**
**dass** die Neigungsfläche (35) zur Frontseite (22a) hin konvex gekrümmt ist.

4. Turbinenrad oder Handstück nach einem der vorherigen Ansprüche,
**dadurch gekennzeichnet,**
**dass** die Neigungsfläche (35) auch in die der Drehrichtung (7b) des Turbinenrads (7) entgegengesetzte Umfangsrichtung geneigt ist.

5. Turbinenrad oder Handstück nach Anspruch 4,
**dadurch gekennzeichnet,**
**dass** - längs der Drehachse (7a) gesehen - die Neigungsfläche (35) bezüglich dem nicht geneigten Abschnitt der Rückseite (22b) um einen Winkel W7 von etwa 5° bis 15°, insbesondere etwa 10°, geneigt ist.

6. Turbinenrad oder Handstück nach einem der vorherigen Ansprüche,
**dadurch gekennzeichnet,**
**dass** die Rückseite (22b) der Schaufeln (22) im anderen axialen Endbereich mit einer Einströmrille (41) für das Gas versehen ist, die vorzugsweise eine gerundete Querschnittsform aufweist.

7. Turbinenrad oder Handstück nach einem der vorherigen Ansprüche,
**dadurch gekennzeichnet,**
**dass** die Frontseite (22a) konkav gekrümmt ist.

8. Turbinenrad oder Handstück nach Anspruch 7,
**dadurch gekennzeichnet,**
**dass** die Krümmung (27a) der Frontseite (22a) radial einwärts progressiv ist.

9. Turbinenrad oder Handstück nach einem der vorherigen Ansprüche,
**dadurch gekennzeichnet,**
**daß** die um eine etwa radial verlaufende erste Krümmungsachse (23) gekrümmte Frontseite (22a) der Schaufeln (22) am dem Ringsteg (29) abgewandten Ende mit den Seitenflächen (36) der Schaufeln (22) einen spitzen Winkel (W5) einschließt, der kleiner ist als etwa 35°, insbesondere etwa 10° bis 30°, beträgt.

## Claims

1. A turbine wheel (7) for a gas-operated, medical, in particular dental medical, handpiece (3), having a plurality of blades (22) that extend in the radial direction from a hub (7c) and extend in the axial direction from a radial ring web (29), located in one axial end region of the turbine wheel (7), to a ring recess (31), arranged in the other axial end region of the turbine wheel (7), wherein in each case a longitudinal central plane (25a), intersecting the apex (24) of the associated blade (22) in the central axial region of the apex (24), and the rear side (22b) enclose an acute angle (W4) that is smaller than 38°, in particular approximately 26° to 36°, wherein in each case the front side (22a) of the blades (22) in a secantial longitudinal plane is shaped so as to be substantially concave,
**characterised in that**
the front side (22a) of the blades (22) is also formed so as to be hollow in the radial direction, and the rear side (22b) of the blades (22) has at least in the axial end region remote from the ring web (29) an inclination surface (35) which is inclined towards the front side (22a) in the direction axially away from the ring web (29).

2. A medical, in particular a dental medical, handpiece (3), having an elongate grip portion (3a), in the front end region of which there is rotatably mounted a holding device (5) for a tool (6) that is connected in terms of drive to a turbine wheel (7) according to claim 1 rotatably mounted in the handpiece (3), wherein a delivery line (9) for a gas ends upstream of the turbine wheel (7) in such a way that the emerging gas flow is directed against the front side (22a) of the respective blade (22).

3. A turbine wheel according to claim 1 or a handpiece according to claim 2,
**characterised in that**
the inclination surface (35) is convexly curved towards the front side (22a).

4. A turbine wheel or a handpiece according to one of the previous claims,
**characterised in that**
the inclination surface (35) is also inclined in the circumferential direction in opposition to the direction of rotation (7b) of the turbine wheel (7).

5. A turbine wheel or a handpiece according to claim 4,
**characterised in that**
the inclination surface (35) - viewed along the rotational axis (7a) - is inclined in relation to the non-inclined section of the rear side (22b) by an angle W7 of approximately 5° to 15°, in particular approximately 10°.

6. A turbine wheel or a handpiece according to one of the previous claims,
**characterised in that**
the rear side (22b) of the blades (22) in the other axial end region is provided with an inflow groove (41) for the gas, which groove preferably has a rounded cross-sectional form.

7. A turbine wheel or a handpiece according to one of the previous claims,
**characterised in that**
the front side (22a) is concavely curved.

8. A turbine wheel or a handpiece according to claim 7,
**characterised in that**
the curvature (27a) of the front side (22a) is progressive radially inwards.

9. A turbine wheel or a handpiece according to one of the previous claims,
**characterised in that**
the front side (22a) of the blades (22), which is curved about a first axis of curvature (23) extending in a substantially radial manner, at the end that is remote from the ring web (29) encloses with the side faces (36) of the blades (22) an acute angle (W5) that is smaller than approximately 35°, in particular amounts to approximately 10° to 30°.

## Revendications

1. Roue de turbine (7) pour une pièce à main (3) médicale entraînée par gaz, en particulier pièce à main dentaire, comportant une pluralité d'ailettes (22) qui s'étendent dans une direction radiale depuis un moyeu (7c) et qui s'étendent dans une direction radiale depuis une barre annulaire (29) radiale, se trouvant dans une zone terminale axiale au moins au nombre de une de la roue de turbine (7), vers un évidement annulaire (31) disposé dans l'autre zone terminale axiale de la roue de turbine (7), sachant que respectivement un plan médian longitudinal (25a) coupant le faîte (24) de l'ailette correspondante (22) dans la zone axiale médiane du faîte (24) et le côté arrière (22b) forment un angle aigu (W4), inférieur à 38°, en particulier compris environ entre 26° et 36°, le côté avant (22a) des ailettes (22) étant respectivement formé de manière essentiellement concave dans un plan longitudinal de sécantes,
**caractérisée en ce**
**que** le côté avant (22a) des ailettes (22) est réalisé de manière creuse également dans une direction radiale et que le côté arrière (22b) des ailettes (22) présente une surface d'inclinaison (35) au moins dans la zone terminale axiale tournée vers la barre annulaire (29), laquelle surface d'inclinaison s'incline en direction du côté avant (22a) dans la direction axialement tournée vers la barre annulaire (29).

2. Pièce à main médicale, en particulier pièce à main dentaire (3), comportant une partie de préhension allongée (3a), dans la zone terminale avant de laquelle est logé de manière à pouvoir tourner un dispositif de retenue (5) pour un outil (6) qui se trouve en liaison d'entraînement avec une roue de turbine (7) selon la revendication 1 et logée de manière à pouvoir tourner dans la pièce à main (3), sachant qu'une conduite d'amenée (9) pour un gaz aboutit avant la roue de turbine (7) de telle sorte que le flux de gaz sortant est orienté contre le côté avant (22a) de l'ailette respective (22).

3. Roue de turbine selon la revendication 1 ou pièce à main selon la revendication 2,
**caractérisée en ce**
**que** la surface d'inclinaison (35) est courbée de manière convexe en direction du côté avant (22a).

4. Roue de turbine ou pièce à main selon l'une quelconque des revendications précédentes,
**caractérisée en ce**
**que** la surface d'inclinaison (35) est inclinée également dans la direction périphérique opposée à la direction de rotation (7b) de la roue de turbine (7).

5. Roue de turbine ou pièce à main selon la revendication 4,
**caractérisée en ce**
**que**, vu le long de l'axe de rotation (7a), la surface d'inclinaison (35) est inclinée par rapport à la section non inclinée du côté arrière (22b) d'un angle (W7) compris entre environ 5° et 15°, de préférence d'environ 10°.

6. Roue de turbine ou pièce à main selon l'une quelconque des revendications précédentes,
**caractérisée en ce**
**que** le côté arrière (22b) des ailettes (22) est pourvu, dans l'autre zone terminale axiale, d'une cannelure d'admission (41) pour le gaz, qui présente de préférence une forme de section transversale arrondie.

7. Roue de turbine ou pièce à main selon l'une quelconque des revendications précédentes,
**caractérisée en ce**
**que** le côté avant (22a) est courbé de manière concave.

8. Roue de turbine ou pièce à main selon la revendication 7,
**caractérisée en ce**
**que** la courbure (27a) du côté avant (22a) est progressive radialement vers l'intérieur.

9. Roue de turbine ou pièce à main selon l'une quelconque des revendications précédentes,
**caractérisée en ce**
**que** le côté avant (22a) des ailettes (22) courbé autour d'un premier axe de courbure (23) s'étendant à peu près radialement forme sur l'extrémité tournée vers la barre annulaire (29), avec les surfaces latérales (26) des ailettes (22), un angle aigu (W5), inférieur à environ 35°, compris en particulier entre environ 10° et 30°.
